# EUROPEAN PATENT APPLICATION

(11) **EP 2 743 831 A1**
(43) Date of publication of application: **18.06.2014**
(21) Application number: 12382502.8
(22) Date of filing: 13.12.2012
(51) Int. Cl.: G06F 11/30

(54) **A method and a system for the self-adjustment optimization of a computing device**

(71) Applicant: Telefonica S.A., 28013 Madrid (ES)
(72) Inventor: Molinero Velasco, Francisco Javier, 28013 Madrid (ES); Fuentes Arenaz, Beatriz, 28013 Madrid (ES)
(74) Representative: Gonzalez-Alberto Rodriguez, Natalia

(57) **Abstract**

The method monitoring usage data and data of internal behaviour regarding a plurality of devices of the same type of a device under consideration and further storing said monitored data in a usage database and in a behaviour database; embodiments of the method comprises: building a predicting usage model of said plurality of devices; building an evaluating device behaviour model of said plurality of devices; for the current usage data of said device under consideration, applying the predicting usage model obtained from all possible behaviours of the plurality of devices with a similar usage to the predicted usage and further selecting an optimal behaviour by using the evaluating device behaviour model; and obtaining an optimal parameter configuration for a time interval taking into account the selected optimal behavior and further applying the obtained optimal parameter configuration to the device under consideration.

## Description

### Field of the art

The present invention generally relates, to a method and a system for the self-adjustment optimization of a computing device, and more particularly to a method and system that allow a collection of hardware devices to adjust their configuration parameters.

### Prior State of the Art

A hardware device is typically controlled by a set of configuration parameters that can be tuned or adjusted so that it can be adapted to different working conditions. In many cases the parameters have to be adjusted manually by the end user or a specialized technician. When conditions change, the control parameters must be manually readjusted. That is usually the case in some computer parameters that control the size of swap memory, maximum number of processes, active services.

Alternatively, there are devices where parameters can be adjusted automatically and dynamically. For example, screens that adapt brightness to light conditions, CPUs (Control Processing Unit) that adjust their speed to current processes load or battery life, air conditioning systems that regulate power according to temperature and humidity, etc. To be able to achieve this self-regulation, devices have different ways to measure current operating conditions such as sensors that measure the environment conditions, or internal measures that help control the state of the device.

On the other hand, during the last few decades there has been an important effort in the research and application of predictive mechanisms to a variety of fields. Given a set of monitoring parameters, the future behavior of a device can be estimated using different machine learning algorithms. This predicted behavior can then be used for instance to take preemptive actions to avoid future problems, or to adjust the capacity of a system to accommodate the predicted load or to optimize the energy consumption. These actions are usually implemented as modifications in the configuration parameters of the affected devices, modifications that are typically done either by specialized technicians, either by automatic systems with a previously defined mapping between the expected behavior and the values of the parameters that need to be adjusted.

To try to optimize devices operations automatically, existing solutions measure different key indicators in real time or periodically and adjust control parameters accordingly. This solution is acceptable in cases where a device operation only depends on the current situation and parameters can be adjusted immediately, i.e., a continuous process of self-measuring and adjusting is enough to achieve the expected results.

However, there are cases in which measurements cannot be taken with sufficient periodicity, or knowing the recent past situation is not enough to assure the adequate future behavior. In any case, continuous self-adjustment is not feasible. Besides, in complex scenarios where there are many parameters involved there is not a well-known optimal configuration, just vendors' recommendations for different laboratory simulations. This is the case of complex devices such as RNCs (Radio Network Controller), NodeBs, routers, and servers. There are usually devices whose performance is much better than those of similar devices operating under similar levels of activity, but this is not adequately exploited. Therefore, current solutions lack sufficient flexibility to adapt hardware behavior to complex changing conditions.

### Summary of the Invention

This patent is related to a method and a system that allow a collection of hardware devices such as routers, switches or radio network controllers to automatically adjust their configuration parameters according to the expected activity in the immediate future with the aim of making the devices continually work under optimal conditions.

To that end, the present invention relates, in a first aspect, to a method for the self-adjustment optimization of a computing device, comprising:
- monitoring usage data regarding a plurality of computing devices of the same type of a computing device under consideration;
- monitoring data of internal behaviour of said plurality of computing devices of the same type of said computing device under consideration; and
- further storing said monitored usage data in a usage database and said monitored data of internal behaviour in a behaviour database.

On contrary to the known proposals, the method of the first aspect further comprises performing the following steps:
- building from said monitored usage data a predicting usage model of said plurality of computing devices of the same type of said computing device under consideration;
- building from said monitored data of internal behaviour an evaluating device behaviour model of said plurality of computing devices of the same type of said computing device under consideration;
- obtaining, a Behaviour Search Engine, a set of behaviours, the set of behaviours being obtained by finding similar usages to said predicted usage, the predicted usage obtained from said predicting usage model and further selecting, a Behaviour Evaluation Engine, an optimal behaviour by using said evaluating device behaviour model; and
- obtaining, a Parameter Configuration Search Engine, an optimal parameter configuration for a time interval taking into account said selected optimal behavior and further applying, a Scheduled Configuration Enforcement Engine, said obtained optimal parameter configuration to said computing device under consideration.

The data of internal behavior is measured in terms of a Key Performance Indicator (KPI), said Key Performance Indicator being at least any of energy efficiency, QoS (Quality of Service), CPU load, response time, internal temperature, failure rate, among any other.

Preferably, the monitoring usage data and the monitoring data of internal behaviour are measured periodically every certain period of time continuously, for instance at least every hour but any periodicity could be possible, and further stored in the corresponding databases.

According to an embodiment, the predicting usage model is built within at least a periodical time interval of 24 hours, obtaining at least information describing a device activity profile on a day, by clustering, a machine learning algorithm such as K-Means, EM (Expectation Maximization), and SOM (Self Organizing Map), the at least information describing a device activity profile on a day with information regarding calendar and environment data.

According to another embodiment, the evaluating device behaviour model is built also within at least a periodical time interval of 24 hours, obtaining a numerical value indicating the good behaviour of the plurality of computing devices of the same type of the computing device under consideration; then, the numerical value is stored in the behaviour database for every computing device of the plurality of computing devices of the same type of the computing device under consideration; and the stored numerical value of each computing device is further used to train a machine learning algorithm, such as Support Vector Machine SVM, Neural Network NN, tree based or any other supervised regression algorithm. This training will be then used by the Behaviour Evaluation Engine.

According to another embodiment, an Activation Engine decides when to trigger the prediction usage model and the optimal parameter configuration enforcement. This decision is taken at the configuration time and let the Activation Engine to periodically trigger the optimal parameter configuration based on the runtime behavior of the computing device of said plurality of computing devices of the same type with optimal behavior, or on the other hand, to trigger the optimal parameter configuration at specific points in time, such as specific hours or days, or with a given periodicity.

In case the triggering is based on the runtime behavior of the device, a Usage Profile Diagnosis Engine compares the current usage data of the computing device under consideration with the predicting usage model. This Engine emits a diagnosis indicating whether there is a significant difference between them. In case there is, a Trigger Engine activates a new optimal configuration parameter search.

A second aspect of the present invention, relates to a system for the self-adjustment optimization of a computing device, comprising:
- means for monitoring usage data of a plurality of computing devices of the same type of a computing device under consideration;
- means for monitoring data of internal behaviour of the plurality of computing devices of the same type of the computing device under consideration; and
- a usage database to store the monitored usage data and a behaviour database to store the monitored data of internal behaviour.

On contrary to the known proposals, the system of the second aspect further comprises:
- means for building a predicting usage model from the monitored usage data of the plurality of computing devices of the same type of the computing device under consideration;
- means for building an evaluating device behaviour model from the monitored data of internal behaviour of the plurality of computing devices of the same type of the computing device under consideration;
- a Behaviour Search Engine adapted to obtain a set of behaviours, the set of behaviours being obtained by finding similar usages to said predicted usage, the predicted usage obtained from said predicting usage model;
- a Behaviour Evaluation Engine adapted to select an optimal behaviour of the plurality of computing devices by using said evaluating device behaviour model;
- a Parameter Configuration Search Engine adapted to obtain an optimal configuration parameter during a time interval taking into account said selected optimal behavior; and
- a Scheduled Configuration Enforcement Engine adapted to apply said obtained optimal configuration parameter to the computing device under consideration.

According to an embodiment, a Usage Profile Prediction Engine is adapted to use the predicting usage model to predict the usage profile of the computing device under consideration on at least a day.

According to another embodiment, an Activation Engine is adapted to decide when to trigger the prediction usage model and the optimal configuration parameter enforcement and to work under a scheduled mode or under a self-adaptive mode.

According to yet another embodiment, the Activation Engine comprises a Scheduled Trigger Engine adapted to work under the scheduled mode and a Self-Adaptive Engine adapted to work under the self-adaptation mode. The Self-Adaptive Engine comprising:
- a Usage Profile Diagnosis Engine adapted to compare the current usage data of the computing device under consideration with the predicting usage model; and
- a Trigger Engine adapted to activate a new search to obtain a new optimal configuration parameter if said compared data are different.

Finally, according to yet another embodiment, the plurality of computing devices and/or the computing device under consideration can be any of a Radio Network Controller, a NodeB, a router and/or a server, among any other device with similar communication capabilities.

The system of the second aspect is adapted to implement the method of the first aspect.

### Brief Description of the Drawings

The previous and other advantages and features will be more fully understood from the following detailed description of embodiments, with reference to the attached, which must be considered in an illustrative and non-limiting manner, in which:
Figure 1 is an illustration of the optimal parameters configuration and the generative stages proposed in the present invention.
Figure 2 is an illustration of the optimal parameters configuration and the operative stage proposed in the present invention.
Figure 3 is an example of a device usage repository consisting of a collection of instances with hourly usage information for different devices of the same type.
Figure 4 shows the Usage Profile Prediction Engine generation according to an embodiment.
Figure 5 is an illustration of device behavior KPIs repository information.
Figure 6 shows the internal architecture of the Activation Engine according to the operative stage 3.2 of the present invention.
Figure 7 shows the usage profile diagnosis according to the operative stage 3.2 of the present invention.
Figure 8 shows the usage prediction based on last *h* hours' usage according to the operative stage 3.3 of the present invention.
Figure 9 shows the candidate behaviors selection according to the operative stage 3.4 of the present invention.
Figure 10 shows the optimal behavior evaluation according to the operative stage 3.5 of the present invention.
Figure 11 shows the parameter configuration search according to the operative stage 3.6 of the present invention.

### Detailed Description of Several Embodiments

With the current invention, a complex device can automatically be efficiently configured according to the expected activity for the next hours. To address parameter configuration complexity the procedure is able to look for a similar device that at any time in the past has experienced a level of activity that is equivalent to the activity profile predicted for the device under consideration and with the best possible behavior. This way a device can copy the best behavior among the devices of its class.

The main objective of this invention is that complex devices such as RNCs, NodeBs, routers, and servers, whose behavior is governed by many configuration parameters, can work in optimal conditions in relation to different desired KPIs like energy efficiency and QoS, self-adapting their control parameters to the expected future activity for the next hours.

Given a set of devices of a specific type, the different behaviors (in terms of KPIs) for different usage profiles can be measured and conveniently classified. As each device has its own parameters configuration and level of usage, given a sufficiently large time period and number of devices to observe, many different combinations of usage-behavior can be observed and collected. Therefore, once the observation and classification stage is completed, given a new usage profile, the best behavior associated with a similar usage profile can be located, and the configuration parameters assigned to that optimal behavior can be recovered. The invention includes a mechanism that triggers the runtime stage. This mechanism allows the system administrator to select the activation mode: either periodically, or when a significant change in the device usage with respect to the predicted profile is found.

For any device, machine learning techniques can be applied to forecast its usage profile in the next hours as a function of its previous hours' usage, type of day, and other relevant information. This forecasted usage profile can be used in the way described above to obtain the best configuration parameters.

The methodology is applied to devices belonging to a type or family of devices, e.g., radio cells from the same vendor, routers of the same brand and model, etc. In the context of this invention devices have three types of data: usage data define measurable external inputs to the devices, such as number of users, number of processes, voice traffic or broadband traffic, i.e., they define a device usage; behavior KPIs define measurable internal data that describe the state of a device, such as CPU load, response time, internal temperature or failure rate, i.e., they define the device behavior; configuration data define the different configuration parameters that control the operation and performance of a device, such as CPU speed, fan speed, number of carriers or radiated power. The methodology consists of three stages. The first two are used to generate and train the necessary models, and the third stage is the operational mode where the generated models are used:
- Stage 1: Construction of a model for predicting the usage profile of a device for the next time interval. Using machine learning techniques a model can be constructed so that given the usage profile of a device during the previous hours, together with additional parameters such as day of the week, month and type of day, the device usage profile can be predicted for the next hours or time interval under consideration.
- Stage 2: Construction of a model for evaluating devices behaviors. Using machine learning techniques a model can be constructed so that given a set of KPIs that describe a device behavior during a time interval, a numerical evaluation can be obtained indicating how good is the device overall behavior in the given interval.
- Stage 3: Application of the two previous stages to obtain the best parameter configuration for a device. The future usage profile of a device can be predicted from the model obtained in stage 1, which is used to obtain a set of candidate behaviors; based on the historical records of the performance of the devices of the same type or family, candidate behaviors are then evaluated and the optimal one selected. Finally, given the optimal behavior, the optimal parameter configuration for the time interval can be recovered and transmitted to the device.

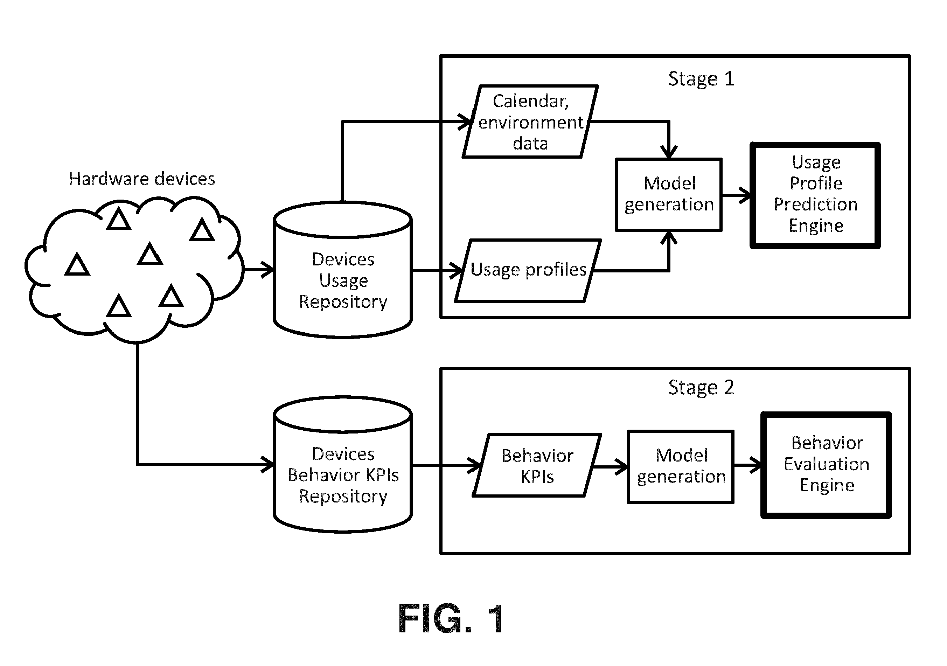

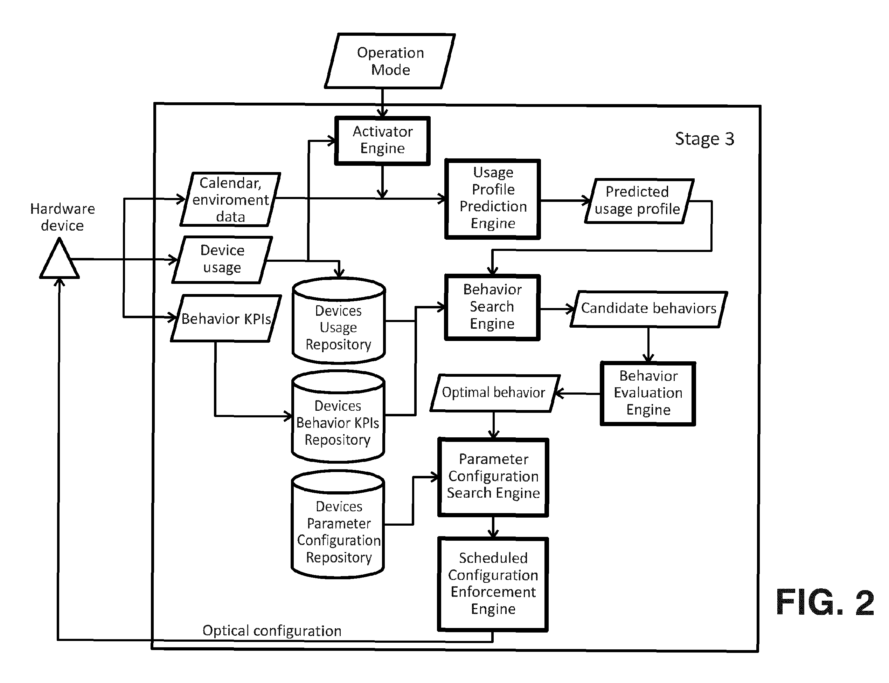

Figures 1 and 2 describe the three stage process and modules proposed in this present invention.

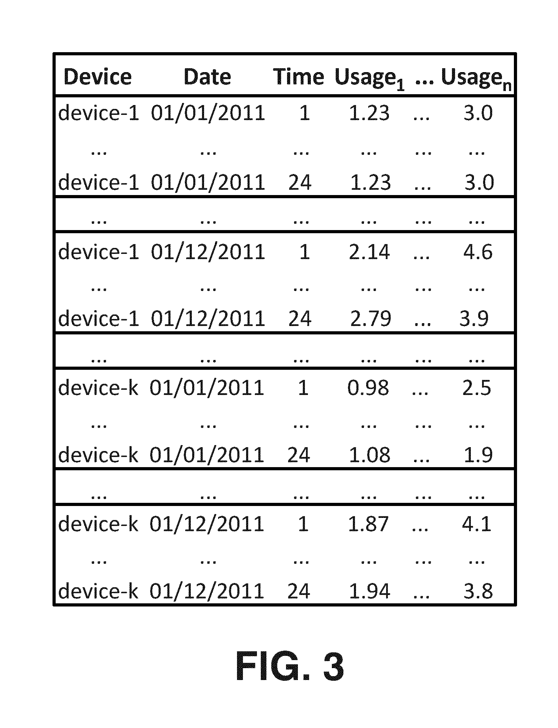

Stage 1: Construction of a model for predicting the usage profile of a device for the next time interval: The first stage of this methodology is building a model for the prediction of the future usage of devices belonging to a type of device. Given the first usage hours of a device during a day, the model must be able to predict the device usage for the next hours, typically for the rest of the day. It is assumed that there exists a devices usage repository consisting of a collection of instances of devices of the same type, as shown in Figure 3. Each instance is composed of different attributes: device identification, date and time, and one or more numerical attributes, each measuring the device usage at the specified date and time. In Figure 3, instances correspond to different usages measured every hour but any periodicity could be possible, for example, 1, 5 or 15 minutes.

Assuming intervals of 24 hours are used, to construct the model, the repository instances are grouped by device and day, i.e., for each device and day there would be 24 instances in the group. Each group constitutes an input to train the model. Assuming there are *n* numerical attributes that describe the device usage each hour, there would be a total of *24***n* usage attributes in each group. Therefore, the information in a group describes a Device Activity Profile on a Day (DAPD). To this information about a device on a specific day, there can be added calendar and environment data such as day of the week, season, and any other relevant data that can help explain the device usage during that day. This same procedure can be applied to measures taken with a different periodicity (for example, every 15 minutes), and to different time intervals (for example, 12 hours).

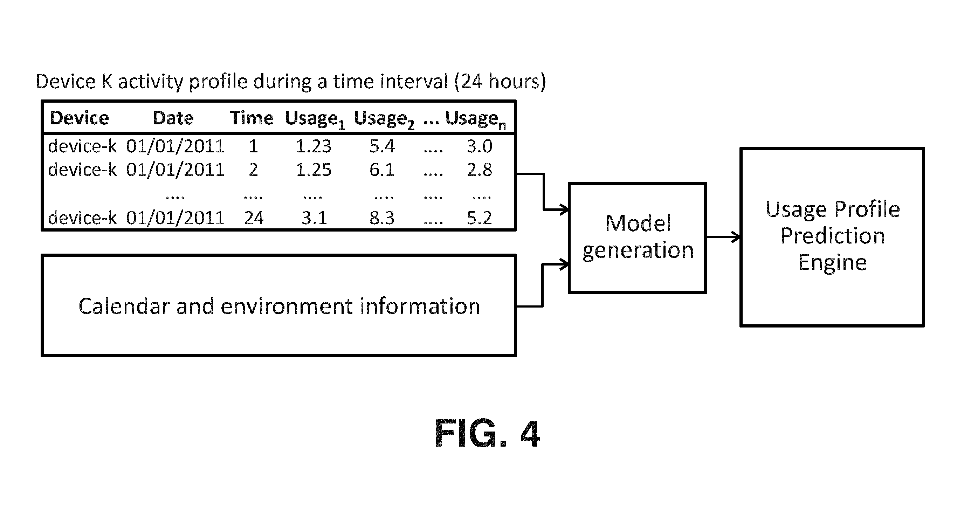

An unsupervised machine learning algorithm is used to cluster all DAPDs. Having sufficient data instances and defining a sufficiently large number of clusters all possible types of usage profiles can be defined. There are different clustering algorithms that could be used to this end, such as K-Means, EM, and SOM. Figure 4 shows the aforementioned two types of inputs to the clustering algorithm and the resulting Usage Profile Prediction Engine.

Once the DAPDs have been clustered, the Usage Profile Prediction Engine can be used to predict the usage profile for a device on a day given the first hours' usage profile of that day. If there are already usage data about the first *h* hours of the day, and assuming again that there are *n* usage attributes, there would be *h*n* usage attributes, plus all calendar and environment attributes, giving a total of *T* attributes. These *T* attributes are then used to search the most suitable cluster, by comparing just the *T* known attributes and ignoring the rest (i.e., the attributes corresponding to the remaining hours of the day).

Stage 2: Construction of a model for evaluating devices behaviors: The objective of this stage is constructing a model for evaluating devices behaviors during a time interval, so that, given the behavior KPIs of a device during a time interval (for example 24 hours), the model can give a numerical value that indicates how well the device is operating.

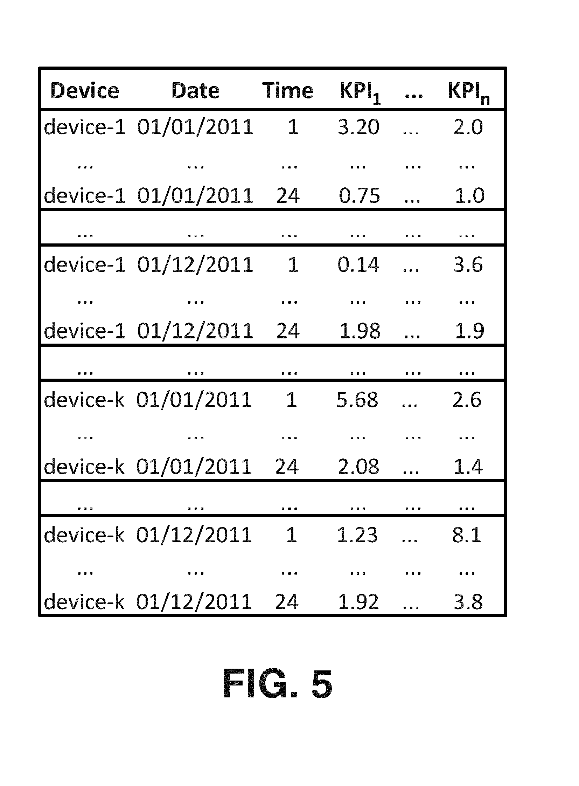

To this end, as shown in stage 2 of figure 1, a devices behavior KPIs repository is needed; this repository stores behavior information for every device and for every time interval measured with a certain periodicity, in such a way that given a device, a time interval and a periodicity, the device behavior can be described in terms of different KPIs. Behavior KPIs such as CPU load, energy consumption, and internal temperature could be used. Figure 5 shows the behavior information of *k* devices during 24 hours' time intervals, with *n* KPIs measured every hour.

The information from the behavior repository is used to train a machine learning algorithm in order to obtain the Behavior Evaluation Engine. Different machine learning algorithms can be used to this end. A possible solution is using a supervised regression algorithm, such as Support Vector SVM, NN or tree classifiers. As the number of attributes (different KPIs) can be large, to help to evaluate a set of instances with which to train and test the algorithm, a clustering algorithm such as a SOM can previously be used. The instances (devices behaviors) classified in each SOM neuron can then be evaluated with equal or similar values. This way a sufficient number of evaluated instances can be obtained and the regression algorithm can be trained and tested in order to build the model used by the Behavior Evaluation Engine.

Once the model is trained the Behavior Evaluation Engine is ready to evaluate devices behaviors.

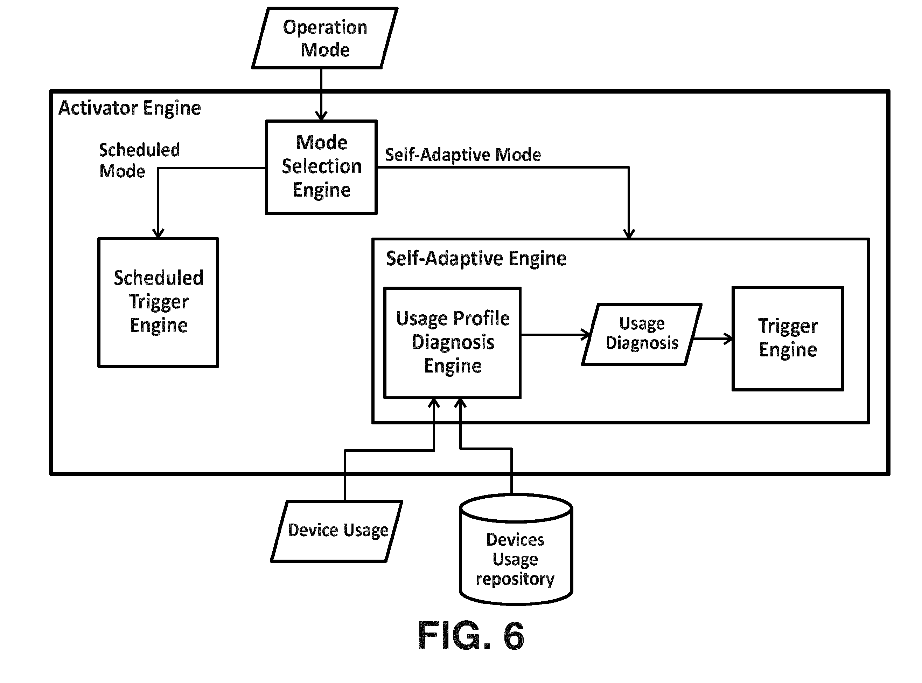

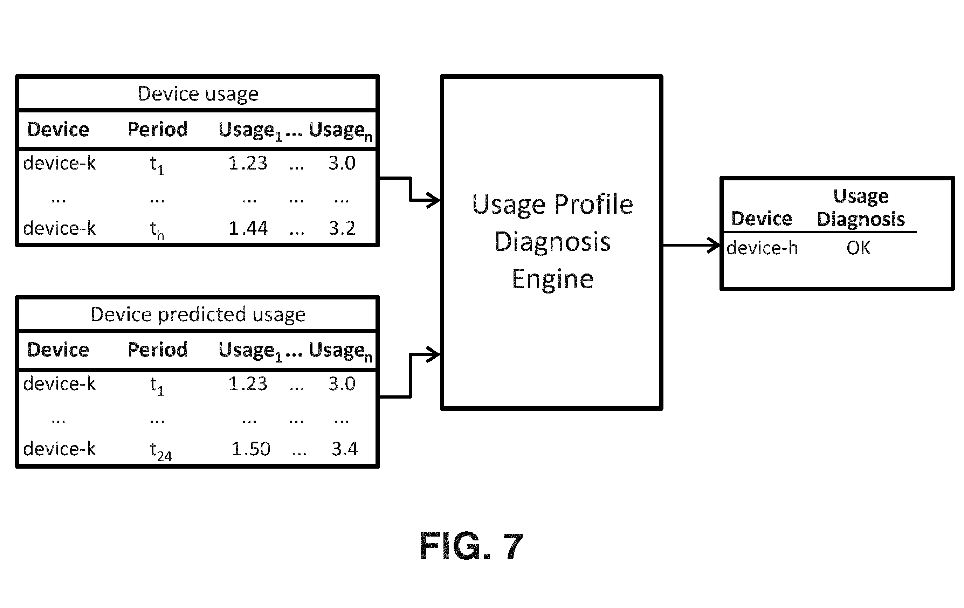

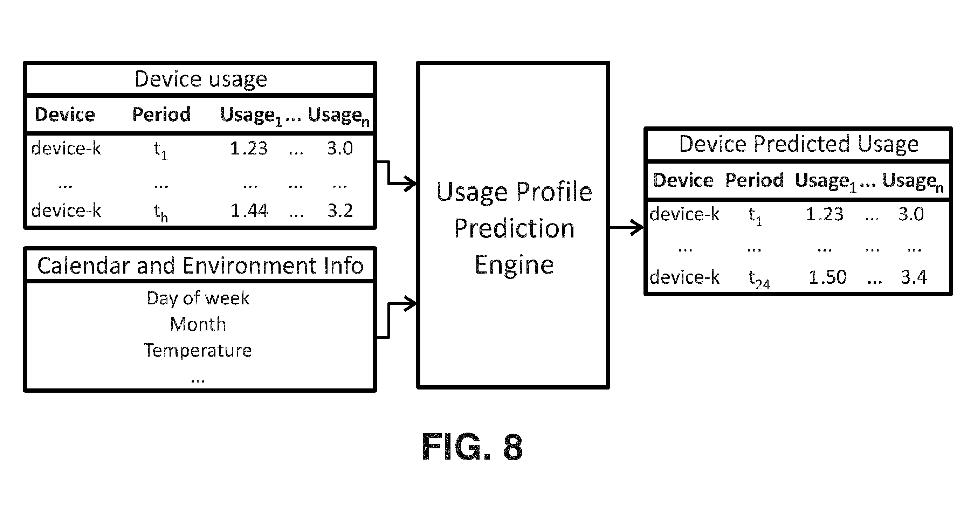

Stage 3: Obtaining the best parameter configuration for a device: This is the operative stage of this invention. Given a device activity for the last hours, the final goal of this stage is finding the best parameters configuration that can be assigned to this device so that it works in optimal conditions. It comprises several sub-stages:
- Stage 3.1: Monitoring stage. The runtime information of the devices (calendar and environment data, device usage and KPIs) is continuously collected and stored in the corresponding repositories.
- Stage 3.2: Activation stage. In this stage, the Activation Engine decides when to trigger the actual prediction and optimal parameter configuration enforcement. The need for this stage comes from the fact that the device usage and behavior are expected to vary over time, and therefore a readjustment of the configuration parameters may be needed. Nevertheless, the execution of the stages needed to find out the optimal configuration may be time and resource consuming, so that a mechanism is needed to trigger those stages only when certain conditions are fulfilled. Figure 6 shows the inner details of the Activation Engine. It receives as input an operation mode, set by the system administration at configuration time, and indicates whether the Activation Engine should work under a Scheduled Mode or with a Self-Adaptive one. Scheduled Mode means that the next stages to find the optimal configuration parameter are triggered at specified points in time (specific hours or days, or with a given periodicity). Self-Adaptive Mode implies that the triggering of the next stages is always based on the runtime behavior of the device. As shown in Figure 7, the Self-Adaptive Engine receives the device usage and access the repository where the current and predicted usage profiles are stored. First, the Usage Profile Diagnosis Engine compares the current device usage with the one that was predicted, and emits a diagnosis indicating whether there is a significant difference between them. In case there is, then the Trigger Engine launches the next stages to find out the new optimal configuration parameters that better fits to the current usage profile.
- Stage 3.3: Usage prediction. The input information to this stage is last hours' usage profile of a device, which consists of different activity measurements: *usage₁*, *usage₂* ... *usageₙ.* Assuming that measures have been obtained with hourly periodicity for the last *h* hours concerning *n* different usages, there would be *h x n* attributes. (The same procedure can equally be applied if measures are taken with a different periodicity, for example, 15 minutes). Additionally, information relative to calendar and environment can be included, for example, day of the week, month, holiday, mean temperature, etc. This input information is applied to the Usage Profile Prediction Engine generated in stage 1 to obtain the device predicted usage for the next hours, as shown in Figure 8.

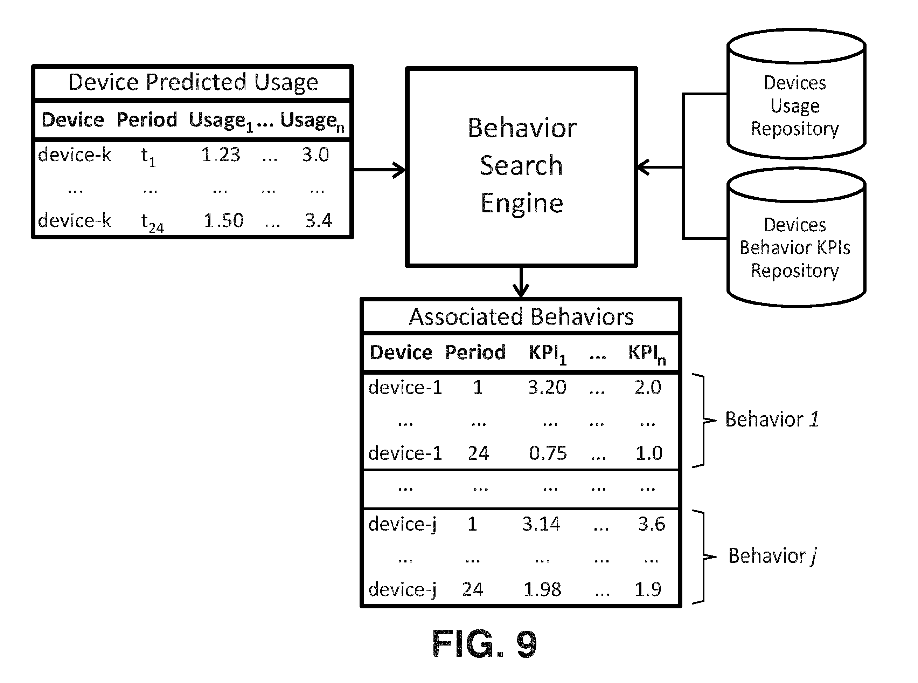

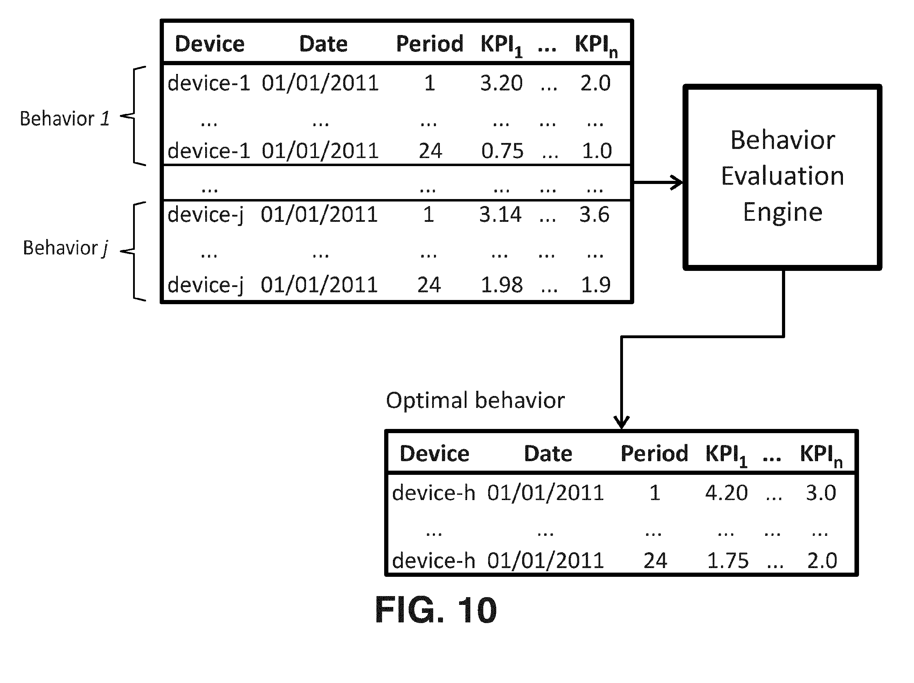

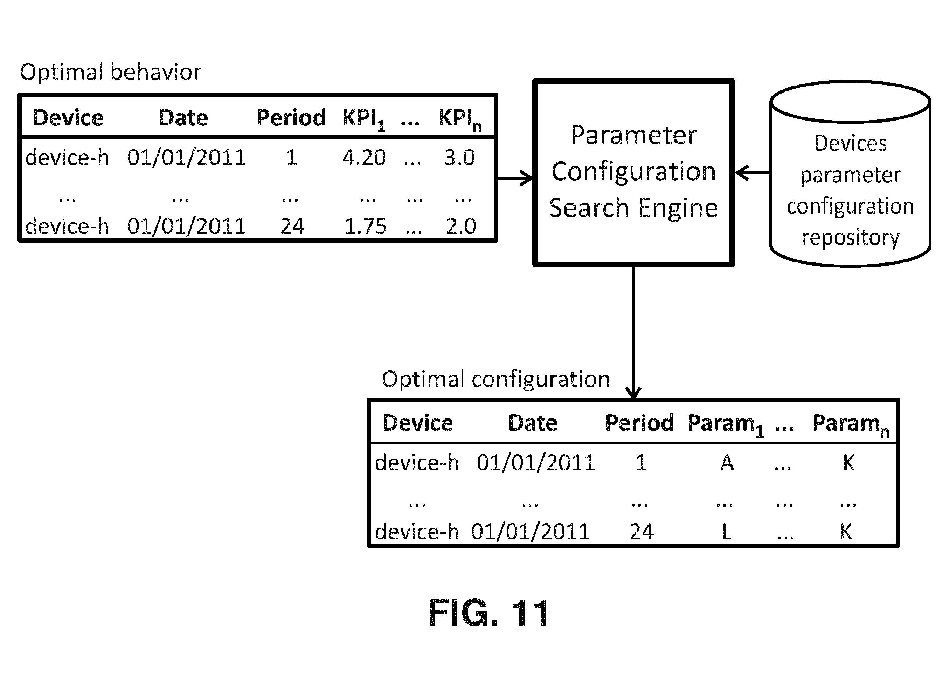

- Stage 3.4: Candidate behaviors selection: given the predicted usage profile, the Behavior Search Engine searches the devices usage repository to locate usages that have been close enough to the predicted one (i.e. with a level of similarity above a given threshold according to some similarity measure). For each of the device usages thus obtained, the corresponding device identification and time interval are collected and used to access the devices behavior KPIs repository in order to recover the behavior for that given device identification and time interval. As a result of this process, a set of behaviors is obtained, as shown in Figure 9.
- Stage 3.5: Optimal behavior evaluation. The different candidate behaviors obtained from stage 3.4 are evaluated by means of the Behavior Evaluation Engine, and the best behavior is selected, as shown in Figure 10.
- Stage 3.6: Parameter configuration search. After obtaining the optimal behavior associated to the predicted device usage, the configuration parameters associated to the device with this optimal behavior for the time interval under consideration are recovered from the Devices Parameter Configuration Repository, as shown in Figure 11. The configuration search is direct because the optimal behavior from previous stage holds a reference to a device identification and date which can be used as a direct access to the configuration repository.
- Stage 3.7: Scheduled Configuration Enforcement Engine. This engine is in charge of transmitting the new configuration parameters to the appropriate device. Since the optimal configuration spans several periods, the engine executes a scheduled enforcement of the parameters. For example, if there are hourly periods the engine will trigger a new enforcement every hour.

The foregoing describes embodiments of the present invention and modifications, obvious to those skilled in the art can be made thereto, without departing from the scope of the present invention.

## Claims

1. A method for the self-adjustment optimization of a computing device, comprising:
- monitoring usage data regarding a plurality of computing devices of the same type of a computing device under consideration;
- monitoring data of internal behaviour of said plurality of computing devices of the same type of said computing device under consideration; and
- further storing said monitored usage data in a usage database and said monitored data of internal behaviour in a behaviour database;
**characterized in that** it further comprises performing the following steps:
- building from said monitored usage data a predicting usage model of said plurality of computing devices of the same type of said computing device under consideration;
- building from said monitored data of internal behaviour an evaluating device behaviour model of said plurality of computing devices of the same type of said computing device under consideration;
- obtaining, a Behaviour Search Engine, a set of behaviours, said set of behaviours being obtained by finding similar usages to the predicted usage, said predicted usage obtained from the predicting usage model and further selecting, a Behaviour Evaluation Engine, an optimal behaviour by using said evaluating device behaviour model; and
- obtaining, a Parameter Configuration Search Engine, an optimal parameter configuration for a time interval taking into account said selected optimal behavior and further applying, a Scheduled Configuration Enforcement Engine, said obtained optimal parameter configuration to said computing device under consideration.

2. A method according to claim 1, **characterized in that** it comprises measuring said data of internal behavior in terms of a Key Performance Indicator, said Key Performance Indicator being at least any of energy efficiency, QoS, CPU load, response time, internal temperature and/or failure rate.

3. A method according to claim 1, **characterized in that** said monitoring usage data and said monitoring data of internal behaviour are measured periodically every certain period of time continuously and further stored in the corresponding databases.

4. A method according to claim 3, comprising measuring said monitoring at least every hour.

5. A method according to claim 1, **characterized in that** said predicting usage model is built within at least a periodical time interval of 24 hours, obtaining at least information describing a device activity profile on a day, by clustering, a machine learning algorithm, said at least information describing a device activity profile on a day with information regarding calendar and environment data.

6. A method according to claim 1, comprising:
- building said evaluating device behaviour model within at least a periodical time interval of 24 hours, obtaining a numerical value indicating the good behaviour of said plurality of computing devices of the same type of said computing device under consideration;
- storing said numerical value in said behaviour database for every computing device of said plurality of computing devices of the same type of said computing device under consideration; and
- further using said stored numerical value of each computing device to train a machine learning algorithm.

7. A method according to claim 1, **characterized in that** an Activation Engine decides when to trigger said prediction usage model and said optimal parameter configuration enforcement.

8. A method according to claim 7, **characterized in that** said Activation Engine periodically triggers said optimal parameter configuration based on the runtime behavior of the computing device of said plurality of computing devices of the same type.

9. A method according to claim 7, **characterized in that** said Activation Engine triggers said optimal parameter configuration at specific points in time.

10. A method according to claim 8, **characterized in that** a Usage Profile Diagnosis Engine compares the current usage data of said computing device under consideration with said predicting usage model.

11. A method according to claim 10, comprising activating, a Trigger Engine, a new search to obtain a new optimal configuration parameter if said compared data are different.

12. A system for the self-adjustment optimization of a computing device, comprising:
- means for monitoring usage data of a plurality of computing devices of the same type of a computing device under consideration;
- means for monitoring data of internal behaviour of said plurality of computing devices of the same type of said computing device under consideration; and
- a usage database to store said monitored usage data and a behaviour database to store said monitored data of internal behaviour;
**characterized in that** it further comprises:
- means for building a predicting usage model from said monitored usage data of said plurality of computing devices of the same type of said computing device under consideration;
- means for building an evaluating device behaviour model from said monitored data of internal behaviour of said plurality of computing devices of the same type of said computing device under consideration;
- a Behaviour Search Engine adapted to obtain a set of behaviours, said set of behaviours being obtained by finding similar usages to the predicted usage, said predicted usage obtained from the predicting usage model ;
- a Behaviour Evaluation Engine adapted to select an optimal behaviour of said plurality of computing devices by using said evaluating device behaviour model;
- a Parameter Configuration Search Engine adapted to obtain an optimal configuration parameter during a time interval taking into account said selected optimal behavior; and
- a Scheduled Configuration Enforcement Engine adapted to apply said obtained optimal configuration parameter to said computing device under consideration.

13. A system according to claim 12, **characterized in that** it comprises a Usage Profile Prediction Engine adapted to use said predicting usage model to predict the usage profile of said computing device under consideration on at least a day.

14. A system according to claim 12, **characterized in that** it further comprises an Activation Engine adapted to decide when to trigger said prediction usage model and said optimal configuration parameter enforcement and to work under a scheduled mode or under a self-adaptive mode.

15. A system according to claim 14, **characterized in that** said Activation Engine further comprises a Scheduled Trigger Engine adapted to work under said scheduled mode.

16. A system according to claim 14, **characterized in that** said Activation Engine further comprises a Self-Adaptive Engine adapted to work under said self-adaptation mode, said Self-Adaptive Engine comprising:
- a Usage Profile Diagnosis Engine adapted to compare the current usage data of said computing device under consideration with said predicting usage model; and
- a Trigger Engine adapted to activate a new search to obtain a new optimal configuration parameter if said compared data are different.

17. A system according to claim 12, **characterized in that** said plurality of computing devices and/or said computing device are at least one of a Radio Network Controller, a NodeB, a router, a server or any other communication device with similar capabilities.
